# EUROPEAN PATENT SPECIFICATION

(11) **EP 4 562 478 B1**
(45) Date of publication and mention of the grant of the patent: **09.09.2026**
(21) Application number: 23745092.9
(22) Date of filing: 10.07.2023
(51) Int. Cl.: G05B 17/02, G05B 13/04, G05B 13/02

(54) **METHOD AND SYSTEM FOR PREDICTING THE OUTSIDE TEMPERATURE OF A ROTARY KILN SHELL**
VERFAHREN UND SYSTEM ZUR VORHERSAGE DER AUSSENTEMPERATUR EINES DREHROHROFENMANTELS
PROCÉDÉ ET SYSTÈME DE PRÉDICTION DE LA TEMPÉRATURE EXTÉRIEURE D'UNE ENVELOPPE DE FOUR ROTATIF

(30) Priority: 28.07.2022 EP 22187517
(43) Date of publication of application: 04.06.2025
(73) Proprietor: Refractory Intellectual Property GmbH & Co. KG, 1100 Wien (AT)
(72) Inventor: KORUPOLA, Ajay Kumar, Hyderabad, 500080 (IN); FJELLAND, Marte, 1190 Vienna (AT); LAMMER, Gregor, 1040 Wien (AT); TELSER, Heinz, 1160 Vienna (AT)
(74) Representative: Eibel, Anna
(86) International application number: PCT/EP2023/069026
(87) International publication number: WO 2024/022793

(56) References cited:
- WO-A2-2020/188549
- US-A1- 2009 193 936
- XU JINHAO ET AL: "A Soft Sensor Modeling of Cement Rotary Kiln Temperature Field Based on Model-Driven and Data-Driven Methods", IEEE SENSORS JOURNAL, IEEE, USA, vol. 21, no. 24, 1 October 2021 (2021-10-01), pages 27632 - 27639, XP011893309, ISSN: 1530-437X, [retrieved on 20211214], DOI: 10.1109/JSEN.2021.3116937

## Description

The invention relates to a method and system for predicting the outside temperature of a rotary kiln shell for at least one slice n of the rotary kiln.

WO 2020/188549 A2 is concerned with a method and system for monitoring and optimizing the operation of an alumina rotary kiln, and discloses a temperature prediction unit 116 which is configured to predict a gas and a solid temperature profile at preselected locations in the alumina rotary kiln 102 over a predefined time period using the preprocessed real time data and a thermal model stored in a database 126, whereas the thermal model may comprise a first principles driven model, a data-driven model or a knowledge driven model.

EP 1 228 016 B1 is concerned with a kiln plant control system and discloses using a control matrix which includes values determinative of the relationships between the operating parameters and plant measurements, such as, e.g., a hood temperature (Thood) as disclosed in Fig. 6.

J. Xu, D. Fu, L. Shao, X. Zhang and G. Liu, "A Soft Sensor Modeling of Cement Rotary Kiln Temperature Field Based on Model-Driven and Data-Driven Methods," (in IEEE Sensors Journal, vol. 21, no. 24, pp. 27632-27639, 15 Dec.15, 2021, doi: 10.1109/JSEN.2021.3116937) discloses a soft sensor taking the axial air speed, swirling air speed, coal mass flow, material mass flow, secondary air temperature, and x, y, z coordinates as the inputs, while the temperature at a certain position inside the kiln is the output..

During operation of a rotary kiln, it is essential to monitor the status of such a kiln in terms of the outside temperature of a rotary kiln shell. In case this temperature becomes too high, significant damage can occur to such a rotary kiln, e.g., due to (partial) melting of the shell in regions where the outside temperature exceeds a certain threshold. Such excessive temperatures can occur e.g., due to wear of the inside refractories, which might result in an increased thermal load to the shell. The wear of the inside refractories in a rotary kiln cannot easily be monitored during operation, only after shutting down of the kiln an inside inspection can take place. Therefore, knowledge of different wear mechanisms and other processes in rotary kilns are sparse. Additionally other influences on the outside shell temperature, apart from the refractory wear, might be present, such as, e.g., regions in a rotary kiln which possess a higher internal temperature, e.g., caused by exothermic chemical reactions or caused directly by the vicinity of the burner, e.g., in the flame zone, where the temperature might also depend on the fuel, the fuel mix or the fuel volume used. Currently the outside shell temperature is usually monitored by a number of temperature sensors, and whenever the temperature reaches a certain upper temperature threshold, the kiln is shut down and the refractory lining inside the kiln is renewed. Further it is difficult to predict the outside shell temperature for the future production, e.g., in the following days or weeks. Thus, for security reasons, the upper temperature threshold is set to a value significantly below the break down temperature of the shell. In turn, the rotary kiln campaign often ends prematurely, not utilizing the refractory lining to its full potential, thereby increasing operational costs and decreasing productivity. In other words, a prediction of the outside kiln temperature would allow to maintain a rotary kiln in operation for a longer period of time before a renewal of the refractory lining is necessary. Additionally, also a lower temperature threshold is of interest for the operator, for example in cases where the temperature suddenly drops significantly (e.g., a peak down in temperature), as this can lead to an increased thermoshock, resulting in an increased wear of the refractories.

The inventors have realized, that for a reliable prediction of the outside temperature of a rotary kiln shell for at least one slice n of the rotary kiln, a model should be used which is based on a machine learning algorithm being trained with a training feature data set and a training outside temperature data set. Such a machine learning algorithm in a trained state can reliably predict an outside temperature of a rotary kiln shell for at least one slice n of the rotary kiln in the near future. This reliable prediction may be caused by the fact that a machine learning algorithm trained in such a way does not need any prior knowledge to be fed into such an algorithm or a model. Therefore, prior art models based on any physical models, thermodynamical variables, first principles driven models, data-driven models or knowledge driven models have regularly failed in the actual application, which is believed by the inventors to be caused by a lack of full understanding of the complexity of all processes and wear mechanisms taking place in a rotary kiln. The usage of a machine learning algorithm in the context of the present invention does not need any input in regard to such internal wear mechanisms or processes, as the resulting machine learning model is achieved by training the model with a training feature data set and a training outside temperature data set. The inventors have further realized that such models can be trained to very high accuracies when training is performed with a large outside temperature data set in terms of such data having a high spatial resolution on the outside of a rotary kiln shell. The inventors have realized that such large temperature data sets can preferably be provided by using one or more infrared cameras directed at the rotary kiln shell, and able to provide a large number of temperature readings during operation of a rotary kiln.

Therefore, it is an object of the invention to provide a method and a system for predicting the outside temperature of a rotary kiln shell for at least one slice n of the rotary kiln.

The object is achieved by a method according to claim 1 and by a prediction unit according to claim 12 and a prediction system according to claim 14 and a rotary kiln system according to claim 15.

The core idea of the invention is based on the finding, that machine learning can be used to determine the future outside temperature of a rotary kiln shell for at least one slice n of the rotary kiln. This can be achieved especially due to the selection of a machine learning algorithm, feeding this algorithm with a selection of features of the at least one slice n of the rotary kiln and by further training this machine learning algorithm to achieve a model. The model can then be used to predict an outside temperature for the at least one slice n of the rotary kiln based on a prediction feature data set.

The term "predicting", as used herein, is defined as a declaration or indication in advance, in other words, predicting an outside temperature data set (Tₙ(t), t ≥ 0) involves foretelling the (future) outside temperature data set in advance.

The term "machine learning", as used herein comprises the use and development of computer systems that are able to learn and adapt without following explicit instructions, by using algorithms and statistical models to analyze and draw inferences from patterns in data.

The term "machine learning algorithm", as used herein, is defined as an algorithm (an algorithm being a set of rules that must be followed when solving a particular problem) used in machine learning applications. Examples of such machine learning algorithms include DT (Decision Tree Regression), RF (Random Forest Regression), SVR (Support Vector Regression), NN (Neural Network). Machine learning algorithms build a model based on sample data, known as training data, in order to make predictions or decisions without being explicitly programmed to do so. Generally, in a slice n the associated algorithm is denoted by Aₙ.

The term "supervised learning", also referred to as supervised training, as used herein, might comprise use of labeled data sets to train algorithms that classify data or predict outcomes accurately. Supervised learning, also known as supervised machine learning, is a subcategory of machine learning. Supervised learning is the machine learning task of learning a function that maps an input to an output based on example input-output pairs. In the context of the present invention the input-output pair might comprise values for features for the at least one slice n of the rotary kiln and temperature data for the at least one slice n of the rotary kiln.

The term "model parameters", as used herein, might comprise parameters in the model that must be determined by performing a training step, such as supervised learning (by using an input-output pair). These are fitted parameters of the model.

Generally, in a slice n there can be a set of K model parameters for a certain Algorithm Aₙ, denoted by ${P}_{k}^{n}$, *k =* 1, *... , K.*

The term "hyperparameters" as used herein, might comprise adjustable parameters that can be tuned to obtain a certain model. They are parameters whose values are used to control the learning process. In contrast, the values of the model parameters are derived via training. The obtained model will depend on the actual used hyperparameters. For example, the hyperparameters depend on the actually used machine learning algorithm. For a DT the hyperparameters might comprise the depth of the tree or split criteria. Generally, in a slice n there can be a set of J hyperparameters for a certain Algorithm Aₙ, denoted by ${HP}_{j}^{n}$, *j =* 1, ... ,*J.*

The term "machine learning model", as used herein, might comprise a data file that comprises trained data in order to achieve a good fit to the output part of the input-output pair. This file is generated by using a machine learning algorithm with respective hyperparameters after supervised training.

The term "rotary kiln" ("Drehrohrofen"), as used herein, comprises a cylindrical vessel with a longitudinal axis L, the longitudinal axis L of the cylindrical vessel being slightly inclined to the horizontal, the cylindrical vessel rotating around its longitudinal axis L. The cylindrical vessel has an (outer) shell, usually made of a metal (called "rotary kiln shell"), which is lined with refractory bricks on the inside (that is between the inside of the rotary kiln shell and the longitudinal axis L of the rotary kiln). The rotary kiln shell comprises a surface on its side facing away from the longitudinal axis L of the rotary kiln (called "Surface of rotary kiln shell"), where the rotary kiln shell has its outside temperature ("the outside temperature of a rotary kiln shell"). The cylindrical vessel is heated (fired), usually by a burner at the lower end of the cylindrical vessel. During rotation of the cylindrical vessel, material moves gradually downwards from the upper end to the lower end of the cylindrical vessel. The material undergoes continuous stirring and mixing while being heated by the hot flame / hot gas from the burner. Usual application of a rotary kiln includes increasing the temperature of a material, e.g., for calcination in a continuous process.

The term "the outside temperature at the surface of a rotary kiln", as used herein, comprises the temperature measurements at the outside of the rotary kiln, which is at the surface of the rotary kiln shell. This temperature can be measured at this outside of the object by means of temperature measurement devices, e.g., thermal sensor(s), or contactless, e.g., by infrared camera(s) or alike.

The term "slice n of the rotary kiln" as used herein, comprises a section of the rotary kiln, i.e., a section of the cylindrical vessel. This section is preferably a cylinder, e.g., a right cylinder, whereby the cylinder defining the slice is cut out of the cylindrical vessel. In other words, the slice is preferably a cylinder with its longitudinal axis coinciding with the longitudinal axis L of the cylindrical vessel. The slices are numbered, such that slice n is the n-th (e.g., the 1^{st}, 2^{nd}, 3^{rd}...) slice of the rotary kiln. Slices can be quite short (that is they have a short longitudinal dimension), e.g., in the width (which is to be understood as the dimension of the brick along the longitudinal axis L in a mounted form) of a single brick (such as 200 mm) or even a share of a single brick width (e.g. 1/10^{th} of a brick width, such as 20 mm), and preferably a slice comprises at least one single temperature measurement. In several regions the slices might be longer, e.g., up to 5 (such as 1000 mm) or even 10 brick widths (such as 2000 mm).

The term "feature for the at least one slice n of the rotary kiln" as used herein, comprises any input value or data extracted from the production and / or laboratory information management system of the rotary kiln. For example, the features can comprise process features such as the flame temperature, inlet chamber temperature, torque of the rotary kiln, energy consumption, as well as chemical features, such as alkali content, chloride content, sulfur content of the hot meal and / or clinker.

The term "temperature data" as used herein, comprises a machine-readable data structure, e.g., in the form of a single temperature value, or a set of temperature values in the form of a field / vector, or a matrix containing temperature values.

A prediction unit is understood to mean one or more devices for carrying out the respective method steps described below, and which, for this purpose, comprise either discrete electronic components in order to process signals, or which are implemented partially or completely as a computer program in a computer.

In a first aspect of the invention, the object is achieved by providing a method for predicting an outside temperature (Tₙ(t), t≥0) of a rotary kiln shell for at least one slice n of the rotary kiln, with the steps:
(a) a training feature providing step for providing a training feature data set ( ${I}_{m}^{n} \left(t\right)$, m = 1 ,...,M*, t < 0), preferably comprising values for M* features of the rotary kiln;
(b) a training temperature providing step for providing a training outside temperature (Tₙ(t), t < 0) of a rotary kiln shell for the at least one slice n of the rotary kiln as the training outside temperature data set (Tₙ(t), t < 0);
(c) a model setup step for setting up at least one model Aₙ* for the at least one slice n of the rotary kiln, comprising:
   (i) an algorithm selection step for selecting at least one algorithm Aₙ for the at least one slice n of the rotary kiln from a machine learning algorithm, the at least one algorithm Aₙ comprising model parameters and hyperparameters;
   (ii) an algorithm training step for training the at least one algorithm Aₙ for the at least one slice n of the rotary kiln by using the training feature data set ( ${I}_{m}^{n} \left(t\right)$, m = 1 ,...,M, t < 0, M ≤ M*) and the training outside temperature data set (Tₙ(t), t < 0) leading to the at least one algorithm Aₙ for the at least one slice n of the rotary kiln in a trained state;
   (iii) the algorithm training step is based on supervised learning;
   (iv) whereby a prediction model Aₙ* is achieved, which comprises the at least one algorithm Aₙ for the at least one slice n of the rotary kiln in a trained state, and a set of hyperparameters ( ${HP}_{j}^{n}$, *j* = 1, *... , J*);
(d) a prediction feature providing step for providing a prediction feature data set ( ${I}_{m}^{n} \left(t\right)$*,* m = 1 ,...,M, t ≥ 0), preferably comprising values for the M features for the at least one slice n of the rotary kiln;
(e) a temperature prediction step for predicting an outside temperature data set (Tₙ(t), t ≥ 0) for the at least one slice n of the rotary kiln based on the prediction feature data set ( ${I}_{m}^{n} \left(t\right)$, m = 1 ,...,M, t ≥ 0) by using the prediction model Aₙ*.

Preferably the method predicts an outside temperature (Tₙ(t), t ≥ 0) of a rotary kiln shell (i.e., the outside temperature at the surface of the rotary kiln) for at least one slice n of the rotary kiln. Preferably the at least one slice n of the rotary kiln may cover all of a specific zone of the rotary kiln, such as an outlet zone, a lower transition zone, a burning zone, an upper transition zone, a safety zone, a calcining zone or an inlet zone. Alternatively, the method may predict an outside temperature for the whole rotary kiln shell (Tₙ(t), t ≥ 0, n = 1,...,N).

Preferably the method runs at a certain point in time (here at t = 0) and can predict an outside temperature at that time or in the future (t ≥ 0).

Preferably, a training feature data set ( ${I}_{m}^{n} \left(t\right)$, m = 1,...,M*, t < 0), preferably comprising values for M* features of the rotary kiln, is provided in a training feature providing step. The training feature data set ${I}_{m}^{n} \left(t\right)$ is collected in the past, that is at a certain time t < 0, i.e., before the execution of the method. The number M* of such features can be in the range of 5 to 500, preferably 10 to 400, most preferably 50 to 300. The features ${I}_{m}^{n} \left(t\right)$ are preferably selected from laboratory values or properties of clinker, kiln feed, hot meal, fuel type or from operational parameters of the kiln, such as pressure or flame temperature. The training feature data set ${I}_{m}^{n} \left(t\right)$ comprises time series of values of each feature at specific times *t* < 0: *t*₁, ... , *t_{K}.* The times *t*₁, ... , *t_{K}* are preferably selected from a time interval between just before the execution of the method up to certain time in the past, such as at least 50 days in the past, preferably at least 100 days in the past, more preferably at least 300 days in the past, most preferably 500 days in the past.

Preferably, a training outside temperature data set (Tₙ(t), t < 0) comprising outside temperature data of a rotary kiln shell for the at least one slice n of the rotary kiln is provided in a training temperature providing step. The outside temperature data set Tₙ(t) is collected in the past, that is at a certain time t < 0, i.e., before the execution of the method. The outside temperature data set Tₙ(t) may comprise a single temperature value per slice n of the rotary kiln at a certain time t or alternatively may comprise multiple temperature values per slice n of the rotary kiln at a certain time t. The outside temperature data set Tₙ(t) comprises time series of values of each temperature at times *t <* 0: *t*₁, ... , *t_{K}.* The times *t*₁, ... , *t_{K}* are preferably selected from a time interval between just before the execution of the method up to certain time in the past, such as at least 50 days in the past, preferably at least 100 days in the past, more preferably at least 300 days in the past, most preferably 500 days in the past. The time t is preferably selected from the same time interval as for the training feature data set ${I}_{m}^{n} \left(t\right)$. Most preferably the outside temperature data set Tₙ(t) and the training feature data set ${I}_{m}^{n} \left(t\right)$ comprise temperature data and values for M* features taken at the same time t. In other words, for all times *tₖ* < 0: *k* = 1, ... , *k* there exist pairs of ${I}_{m}^{n} \left({t}_{k}\right)$ and Tₙ(tₖ) at the same time tₖ.

Preferably a pre-processing step for pre-processing of at least one data set is performed, whereas the at least one data set is selected from the list: a training feature data set ( ${I}_{m}^{n} \left(t\right)$, m = 1,...,M*, t < 0), training outside temperature data set (Tₙ(t), t < 0).

Preferably the pre-processing step for pre-processing of at least one data set, such as a training feature data set ( ${I}_{m}^{n} \left(t\right)$, m = 1,...,M*, t < 0), and or a training outside temperature data set (Tₙ(t), t < 0), comprises: checking of the data format and data structure of the data set, and / or checking of the consistency of the data set and / or outlier extraction of the data set, and / or removal of duplicates in the data set and / or missing value imputation. This pre-processing allows to achieve a faster convergence of the algorithm training step and thus saves computational time.

Preferably the pre-processing step for pre-processing of at least one data set comprises: scaling of the values in the data set. With this scaling the convergence of the algorithm training step is significantly faster and thus saves additional computational time. Further to that, scaling leads to a significant reduction of memory required for storing and handling the training feature data set ( ${I}_{m}^{n} \left(t\right)$, m = 1,...,M*, t < 0).

Preferably a model setup step for setting up at least one model Aₙ* for the at least one slice n of the rotary kiln is performed.

Preferably the model setup step for setting up at least one model Aₙ* for the at least one slice n of the rotary kiln further comprises a scoring function setup step for setting up a scoring function Eₙ(t) for the at least one slice n of the rotary kiln, the scoring function being selected from: RMSE (Root Mean Square Error), trend, weighted scoring function. The scoring function Eₙ(t) may be a function of at least one algorithm Aₙ, selected in an algorithm selection step, and the training outside temperature data set (Tₙ(t), t < 0). In other words, the scoring function Eₙ(t) may provide a score by comparing the output of at least one algorithm Aₙ (during the training phase, at t < 0) to the training outside temperature data set (Tₙ(t), t < 0). As the training outside temperature data set (Tₙ(t), t < 0) is the target of the algorithm training step, the scoring function Eₙ(t) provides a measure on the accuracy of a certain algorithm Aₙ in a certain state. Preferably the scoring function Eₙ(t) is selected as the RMSE calculated at time t, in that for all *t <* 0: *t*₁*,* ... , *t_{K}*, ${E}_{n} \left(t\right) = \sqrt{{\sum }_{k = 1}^{K} \frac{{\left({A}_{n}\left({t}_{k}\right)-{T}_{n}\left({t}_{k}\right)\right)}^{2}}{K}}$. Preferably the scoring function Eₙ(t) is selected as the trend calculated at time t, in that for all *t* < 0: *t*₁*,* ... , *t_{K},* ${E}_{n} \left(t\right) = \sqrt{{\sum }_{k = 1}^{K} {\left.\frac{Δ {A}_{n} \left(t\right)}{Δ t}\right|}_{t = {t}_{k}} - {\left.\frac{Δ {T}_{n} \left(t\right)}{Δ t}\right|}_{t = {t}_{k}}}$ . Preferably the scoring function Eₙ(t) is selected as the weighted scoring function calculated at time t, in that for all *t* < 0: *t*₁*,* ... , *t_{K,}* ${E}_{n} \left(t\right) = w 1 ⋅ \sqrt{{\sum }_{k = 1}^{K} \frac{{\left({A}_{n}\left({t}_{k}\right)-{T}_{n}\left({t}_{k}\right)\right)}^{2}}{K}} + w 2 ⋅ \sqrt{{\sum }_{k = 1}^{K} {\left.\frac{Δ {A}_{n} \left(t\right)}{Δ t}\right|}_{t = {t}_{k}} - {\left.\frac{Δ {T}_{n} \left(t\right)}{Δ t}\right|}_{t = {t}_{k}}}$.

Preferably a model setup step for setting up at least one model Aₙ* for the at least one slice n of the rotary kiln, comprises an algorithm selection step for selecting at least one algorithm Aₙ for the at least one slice n of the rotary kiln from a machine learning algorithm, the at least one algorithm Aₙ comprising model parameters ( ${P}_{k}^{n}$) and hyperparameters ( ${HP}_{j}^{n}$). The algorithm Aₙ is preferably set up such that an input, such as the training feature data set ( ${I}_{m}^{n} \left(t\right)$), will provide an output Aₙ ( ${A}_{n} \left({P}_{k}^{n}; {HP}_{j}^{n}\right) = f \left({I}_{m}^{n}\left(t\right);t\right)$).

Preferably in the algorithm selection step, the selected machine learning algorithm is selected from any of: tree-based machine learning algorithms, such as Decision Tree (DT), Random Forest (RF), gradient boosting regression; vector based machine learning algorithms, such as Support Vector Regression (SVR); neural network based, such as a simple Neural Network (NN); ensembled machine learning algorithms such as voting regression.

Preferably the model setup step for setting up at least one model Aₙ* for the at least one slice n of the rotary kiln further comprises an algorithm feature selection step before a subsequent algorithm training step, whereas the algorithm feature selection step comprises the selection of M features from the training feature data set ( ${I}_{m}^{n} \left(t\right)$, m = 1,...,M*, t < 0), preferably comprising values for M* features for the at least one slice n of the rotary kiln, and providing a selected training feature data set ( ${I}_{m}^{n} \left(t\right)$, m = 1,...,M, t < 0, M ≤ M*), preferably comprising values for M features for the at least one slice n of the rotary kiln. Preferably the selected training feature data set ( ${I}_{m}^{n} \left(t\right)$, m = 1,..., M, t < 0, M ≤ M*) comprises a reduced number of M features compared to the training feature data set ( ${I}_{m}^{n} \left(t\right)$, m = 1,...,M*, t < 0), preferably comprising values for M* features. Preferably the reduced number of M features is less than 50% of the number M*, more preferable less than 40%, most preferable less than 30%. Preferably the algorithm feature selection step comprises at least one algorithm selected from: correlation-based feature selection (CBFS), mutual information-based feature selection (MIFS), sequential forward selection (SFS), sequential backward selection (SBS). This step will in all cases reduce the runtime for the algorithm training step. Additionally, this step may reduce the number of features used in a subsequent algorithm training step in a way, that the accuracy of the results of the subsequent training step is not compromised, but maybe is even improved.

Preferably the model setup step for setting up at least one model Aₙ* for the at least one slice n of the rotary kiln further comprises an algorithm training step for training the at least one algorithm Aₙ for the at least one slice n of the rotary kiln by using the training feature data set ( ${I}_{m}^{n} \left(t\right)$, m = 1,...,M, t < 0, M ≤ M*) and the training outside temperature data set (Tₙ(t), t < 0) leading to the at least one algorithm Aₙ for the at least one slice n of the rotary kiln in a trained state. Preferably the algorithm training step is based on supervised learning. Preferably a prediction model Aₙ* is achieved, which comprises the at least one algorithm Aₙ for the at least one slice n of the rotary kiln in a trained state, and a set of hyperparameters ( ${HP}_{j}^{n}$, *j =* 1, *... , J*). It has been found by the inventors that such a use of a machine learning algorithm, especially when trained by supervised learning, leads to very good predictions of the outside temperature (Tₙ(t), t ≥ 0) of a rotary kiln shell for at least one slice n of a rotary kiln. The algorithm training step is preferably performed by a variation of the set of K model parameters ( ${P}_{k}^{n}$, *k =* 1, ..., *K*) of the algorithm Aₙ, such that the the training feature data set ( ${I}_{m}^{n} \left(t\right)$, m = 1,...,M, t < 0, M ≤ M*) as the input to the algorithm Aₙ leads to an output of algorithm Aₙ that approximates the training outside temperature data set (Tₙ(t), t < 0). In other words, the scoring function Eₙ(t) is optimized (here: minimized) by a variation of the set of K model parameters( ${P}_{k}^{n}$, *k* = 1, ..., *K*) of the algorithm Aₙ. When the scoring function has reached a certain (minimum) target, such that the scoring function is below a scoring function threshold Eₙ(t) < Eₘᵢₙ, the variation of the set of K model parameters ( ${P}_{k}^{n}$, *k =* 1, ..., *K*) of the algorithm Aₙ is stopped and the algorithm Aₙ is in a trained state, that is when the algorithm Aₙ is applied with the thereby achieved final set of K model parameters ( ${P}_{k}^{n}$, *k =* 1, ... , *K*) of the algorithm Aₙ. Thus a prediction model Aₙ* may be achieved, which comprises the at least one algorithm Aₙ for the at least one slice n of the rotary kiln in a trained state, which comprises a final set of K model parameters ( ${P}_{k}^{n}$, *k =* 1, ... , *K*), as well a set of hyperparameters ( ${HP}_{j}^{n}$, *j* = 1, ... , *J*) of the algorithm Aₙ ( ${A}_{n}^{∗} = {A}_{n} \left({P}_{k}^{n *}; {HP}_{j}^{n}\right) = f \left({I}_{m}^{n}\left(t\right);t\right)$ ).

Preferably a prediction feature providing step for providing a prediction feature data set ( ${I}_{m}^{n} \left(t\right)$, m = 1,...,M, t ≥ 0), preferably comprising values for the M features for the at least one slice n of the rotary kiln, is performed. Preferably the M features of the prediction feature data set ( ${I}_{m}^{n} \left(t\right)$, m = 1,...,M, t ≥ 0) consists of the same M features of the training feature data set ( ${I}_{m}^{n} \left(t\right)$, m = 1,...,M*, t < 0).

Preferably the prediction feature providing step for providing a prediction feature data set ( ${I}_{m}^{n} \left(t\right)$, m = 1,...,M, t ≥ 0) comprises providing the prediction feature data set ( ${I}_{m}^{n} \left(t\right)$, m = 1,...,M, t ≥ 0) based on the production plan of the rotary kiln; or providing the prediction feature data set ( ${I}_{m}^{n} \left(t\right)$, m = 1,...,M, t ≥ 0) based on a continuation of the values from the training feature data set ( ${I}_{m}^{n} \left(t\right)$, m = 1,..., M, t < 0, M ≤ M*); or providing the prediction feature data set ( ${I}_{m}^{n} \left(t\right)$, m = 1,...,M, t ≥ 0) based on a subset of the values from the training feature data set ( ${I}_{m}^{n} \left(t\right)$, m = 1,...,M, t < 0, M ≤ M*). Preferably the prediction feature providing step for providing a prediction feature data set ( ${I}_{m}^{n} \left(t\right)$, m = 1,...,M, t ≥ 0) will comprise providing the prediction feature data set ( ${I}_{m}^{n} \left(t\right)$, m = 1,...,M, t ≥ 0) in the same form and order as the training feature data set ( ${I}_{m}^{n} \left(t\right)$, m = 1,..., M, t < 0, M ≤ M*).

Preferably the model setup step for setting up at least one model Aₙ* for the at least one slice n of the rotary kiln further comprises a temperature prediction step for predicting an outside temperature data set (Tₙ(t), t ≥ 0) for the at least one slice n of the rotary kiln based on the prediction feature data set ( ${I}_{m}^{n} \left(t\right)$, m = 1,...,M, t ≥ 0) by using the prediction model Aₙ*. Preferably the predicted outside temperature data set (Tₙ(t), t ≥ 0) comprises temperature data in the future, that is after running the method (which is at t = 0), i.e., at a time t ≥ 0. The outside temperature data set (Tₙ(t), t ≥ 0) comprises a time series of values of temperatures at specific times *t* ≥ *0: t*₁, ... , *t_{K}.* The times *t*₁, ... , *t_{K}* are preferably selected from a time interval between just before the execution of the method up to certain time in the future, preferably at least 5 days in the future, more preferably at least 10 days in the future, most preferably 30 days in the future.

Preferably, the model setup step for setting up at least one model Aₙ* for the at least one slice n of the rotary kiln comprises a scoring function setup step for setting up a scoring function Eₙ for the at least one slice n of the rotary kiln, whereas the algorithm setup step for setting up at least one algorithm Aₙ for the at least one slice n of the rotary kiln is repeated for different sets (i) of hyperparameters, leading to different models Aₙ⁽ⁱ⁾ with different results of the scoring function Eₙ⁽ⁱ⁾, and subsequently the model Aₙ^{(i*)}, with the best result of the scoring function Eₙ^{(i*)} being selected as the prediction model Aₙ*.

Preferably the training outside temperature data set (Tₙ(t), t < 0) provided in the training temperature providing step comprises temperature data for the at least one slice n of the rotary kiln obtained by at least one temperature surveillance unit, such as an infrared camera. Preferably the temperature surveillance unit (20) comprises at least one of: an infrared camera (25), a discrete temperature measuring probe such as a thermocouple, or an optical temperature measuring device, such as a fiber-optic temperature sensor.

Preferably the method according to this first aspect of the invention is performed for a number of N slices of the rotary kiln in parallel. Thus preferably the method according to this first aspect of the invention is a method for predicting an outside temperature (Tₙ(t), t ≥ 0) of a rotary kiln shell for at least N slices n (n = 1,...,N) of the rotary kiln, preferably for at least 100, more preferably at least 500, most preferably at least 1000 slices, whereas for each slice n the respective method claims are performed. Thus, preferably the at least one slice n comprises preferably at least 100, more preferably at least 500, most preferably at least 1000 slices.

Preferably, the training outside temperature data set (Tₙ(t), t < 0) provided in the training temperature providing step comprises outside temperature data that is averaged within the at least one slice n of the rotary kiln, preferably by averaging the outer temperature data along the circumference of the at least one slice n of the rotary kiln. This allows to train the model algorithm without requiring to obtain a parameter for the rotation of the rotary kiln within a training feature data set.

In a second aspect of the invention, the object is achieved by providing a prediction unit for predicting the outside temperature (Tₙ(t), t ≥ 0) of a rotary kiln shell for at least one slice n of the rotary kiln, comprising:
(a) a training feature interface for receiving a training feature data set ( ${I}_{m}^{n} \left(t\right)$, m = 1,...,M*, t < 0) of the rotary kiln;
(b) a training temperature interface for receiving a training outside temperature data set (Tₙ(t), t < 0) comprising outside temperature data of a rotary kiln shell for the at least one slice n of the rotary kiln;
(c) a temperature prediction interface for providing an outside temperature data set (Tₙ(t), t ≥ 0) for the at least one slice n of the rotary kiln;
the prediction unit being programmed to:
(d) provide the training feature data set ( ${I}_{m}^{n} \left(t\right)$, m = 1,...,M*, t < 0), preferably comprising values for M* features of the rotary kiln, from the training feature interface;
(e) provide the training outside temperature data set (Tₙ(t), t < 0) from the training temperature interface;
(f) set up at least one model Aₙ* for the at least one slice n of the rotary kiln, by:
   (i) selecting at least one algorithm Aₙ for the at least one slice n of the rotary kiln from a machine learning algorithm, the at least one algorithm Aₙ comprising model parameters ( ${P}_{k}^{n}$) and hyperparameters ( ${HP}_{j}^{n}$);
   (ii) training the at least one algorithm Aₙ for the at least one slice n of the rotary kiln by using the training feature data set ( ${I}_{m}^{n} \left(t\right)$, m = 1,...,M, t < 0, M ≤ M*) and the training outside temperature data set (Tₙ(t), t < 0) resulting in the at least one algorithm Aₙ for the at least one slice n of the rotary kiln in a trained state;
   (iii) whereas training the at least one algorithm Aₙ is based on supervised learning;
   (iv) achieving a prediction model Aₙ*, which comprises the at least one algorithm Aₙ for the at least one slice n of the rotary kiln in a trained state, and a set hyperparameters;
(g) provide a prediction feature data set ( ${I}_{m}^{n} \left(t\right)$, m = 1,...,M, t ≥ 0), preferably comprising values for the M features for the at least one slice n of the rotary kiln;
(h) predict an outside temperature data set (Tₙ(t), t ≥ 0) for the at least one slice n of the rotary kiln based on the prediction feature data set ( ${I}_{m}^{n} \left(t\right)$, m = 1,...,M, t ≥ 0) by using the prediction model Aₙ*.

The training feature interface for receiving a training feature data set ( ${I}_{m}^{n} \left(t\right)$, m = 1,...,M*, t < 0) of the rotary kiln might be any interface able to receive a training feature data set from a feature providing unit, such as, e.g., from a source like a memory or a server or directly from a production system or the like.

The training temperature interface for receiving a training outside temperature data set (Tₙ(t), t < 0) for the at least one slice n of the rotary kiln might be any interface able to receive a temperature data set, e.g., from a source like a memory or a server or directly from a temperature surveillance unit, e.g., a unit comprising an infrared camera or the like. Preferably the prediction unit might further comprise a temperature surveillance unit for providing a training outside temperature data set (Tₙ(t), t < 0) comprising temperature data of the outside surface of a rotary kiln shell for the at least one slice n of the rotary kiln to a training temperature interface for receiving the training outside temperature data set (Tₙ(t), t < 0) comprising outside temperature data of a rotary kiln shell for the at least one slice n of the rotary kiln.

The temperature prediction interface for providing an outside temperature data set (Tₙ(t), t ≥ 0) for the at least one slice n of the rotary kiln might be any interface able to provide a temperature data set, e.g., to a source like a memory or a server or directly to a temperature prediction displaying device, such as a display or a monitor or alike.

Any interface is understood to mean one or more devices for receiving or providing a data set as described above, and which, for this purpose, comprise either discrete electronic components in order to handle the data, or which are implemented partially or completely as a computer program in a computer.

The prediction unit according to the second aspect of the invention is preferably programmed to perform any or all the steps according to the first aspect of the invention.

In a third aspect of the invention, the object is achieved by providing a prediction system for predicting the outside temperature (Tn(t), t ≥ 0) of a rotary kiln shell for at least one slice n of the rotary kiln comprising:
a prediction unit according to any of the second aspect of the invention;
a feature providing unit for providing a training feature data set ( ${I}_{m}^{n} \left(t\right)$, m = 1,...,M*, t < 0) for the at least one slice n of the rotary kiln to the training feature interface of the prediction unit;
a temperature surveillance unit for providing a training outside temperature data set (Tₙ(t), t < 0) comprising temperature data of the outside surface of a rotary kiln shell for the at least one slice n of the rotary kiln to the training temperature interface of the prediction unit;
a temperature prediction displaying device for displaying information based on the outside temperature data set (Tₙ(t), t ≥ 0) for the at least one slice n of the rotary kiln provided by the temperature prediction interface of the prediction unit.

The feature providing unit for providing a training feature data set ( ${I}_{m}^{n} \left(t\right)$, m = 1,...,M*, t < 0) for the at least one slice n of the rotary kiln to the training feature interface of the prediction unit might be a source like a memory / data acquisition unit connected to a production and / or laboratory information management system or the like, which is able to provide features of the rotary kiln as the training feature data set ( ${I}_{m}^{n} \left(t\right)$, m = 1,...,M*, t < 0). It is preferable that the feature providing unit receives a feature data set ( ${I}_{m}^{n} \left(t\right)$, m = 1,..,M*, t < 0), preferably comprising values for M* features of the rotary kiln, from the production information management system and / or laboratory information management system of the rotary kiln.

The temperature surveillance unit for providing a training outside temperature data set (Tₙ(t), t < 0) comprising outside temperature data of a rotary kiln shell for the at least one slice n of the rotary kiln to the training temperature interface of the prediction unit might comprise discrete temperature measuring probes, such as thermocouples or alike, or optical temperature measuring devices, such as a fiber-optic temperature sensor. Preferably the temperature surveillance unit comprises an infrared camera, preferably at least one infrared camera. Preferably the infrared camera records the outside kiln shell temperature, and the temperature surveillance unit provides a training outside temperature data set (Tₙ(t), t < 0). Preferably the temperature surveillance unit comprises a fiber-optic temperature sensor. Preferably the fiber-optic temperature sensor is in thermal contact with the rotary kiln shell. Preferably the temperature surveillance unit provides a temperature data set (Tₙ(t), t < 0) comprising outside temperature data of a rotary kiln shell for a number of N slices n (n = 1,...,N) of the rotary kiln, preferably for at least a number of N = 100, more preferably at least a number of N = 500, most preferably at least a number of N = 1000 slices.

The temperature prediction displaying device for displaying information based on the outside temperature data set (Tₙ(t), t ≥ 0) for the at least one slice n of the rotary kiln provided by the temperature prediction interface of the prediction unit might be a display or a monitor or alike.

Exemplary embodiments of the invention are explained in more detail by means of illustrations:
Figure 1 shows a diagrammatic sketch of the first aspect of the invention,
Figure 2 shows a diagrammatic sketch of the second and third aspect of the invention,
Figure 3 shows an exemplary calculation where the training outside temperature data set (Tₙ(t), t < 0) is averaged within the at least one slice n of the rotary kiln,
Figure 4 shows the result of a prediction of the outside temperature (Tₙ(t), t ≥ 0) of a rotary kiln shell.

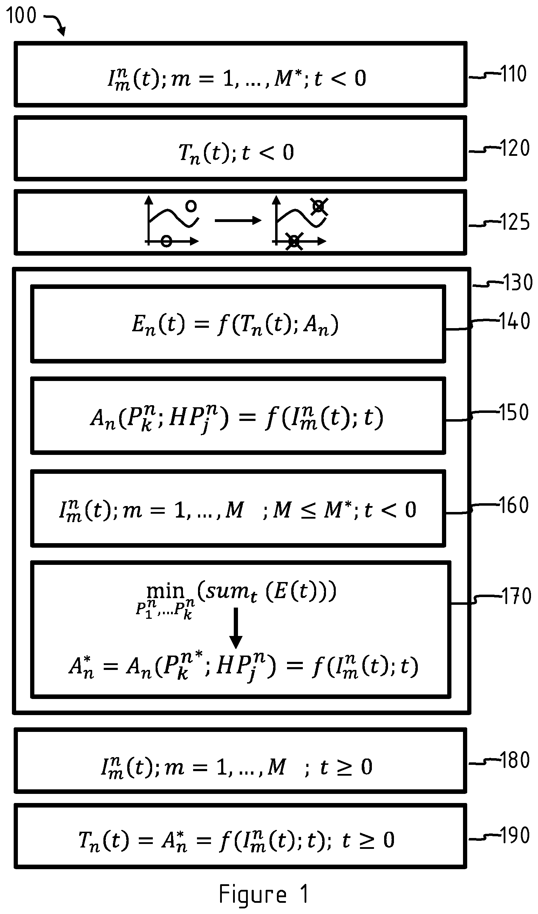

Figure 1 shows a diagrammatic sketch of the first aspect of the invention, which is a method (100) for predicting an outside temperature (Tₙ(t), t ≥ 0) of a rotary kiln shell (3) for slice n of a rotary kiln (1), with several steps. First, a training feature providing step (110) is shown, for providing a training feature data set ( ${I}_{m}^{n} \left(t\right)$, m = 1,...,M*, t < 0) comprising values for M* features of the rotary kiln (1). In a specific example, 150 such features (M* = 150) are provided as a time series ${I}_{m}^{n} \left(t\right)$, m = 1,...,M*, at a certain time t < 0, i.e., before the execution of the method (100). In a specific example, each time series for each feature m comprises values for the last 360 days in intervals of 1 hour (thus k = 8640 values per feature m are provided in this specific example). All features are collected at the same time; thus, the time series are synchronized in that each time series comprises values for the respective feature m at same times of *t <* 0: *t*₁, ... , *t_{K}, K* = 8640 in this specific example.

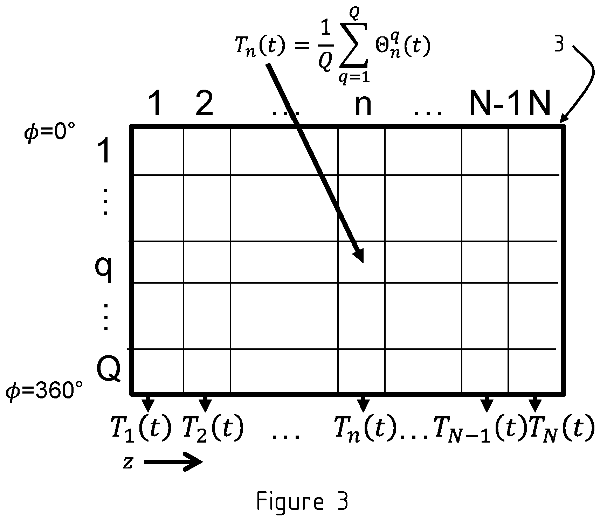

Then a training temperature providing step (120) provides a training outside temperature data set (Tₙ(t), t < 0) comprising temperature data of the outside surface (2) of a rotary kiln shell (3) for slice n of the rotary kiln (1). In the specific example the training outside temperature data set (Tₙ(t), t < 0) provided in the training temperature providing step (120) comprises outside temperature data for the slice n of the rotary kiln (1) obtained by the least one temperature surveillance unit (20), which in this example is an infrared camera (25). The infrared camera may obtain outside temperature data of a rotary kiln shell (3) for several slices n of the rotary kiln. This is shown in Figure 3, where temperature data ${Θ}_{n}^{q} \left(t\right)$ are collected for a slice n (n = 1,...,N) and in a certain segment q (q = 1,...,Q). A segment would be a certain section of the rotary kiln shell (3) running along a z-direction (which is running along the direction of the longitudinal axis L) and comprising a certain range of the azimuth angle *ϕ* of the rotary kiln (1). The training outside temperature data set (Tₙ(t), t < 0) provided in the training temperature providing step (120) comprises outside temperature data averaged within the at least one slice n of the rotary kiln (1), thus in this specific example the provided training outside temperature data set (Tₙ(t), t < 0) of slice n is the average temperature Tₙ(t) in that slice, thus ${T}_{n} \left(t\right) = \frac{1}{Q} {\sum }_{q = 1}^{Q} {Θ}_{n}^{q} \left(t\right)$.

In this specific example a pre-processing step (125) for pre-processing of at least one data set is performed, whereas in this example two data sets are used, namely the training feature data set ( ${I}_{m}^{n} \left(t\right)$, m = 1,...,M*, t < 0) and the training outside temperature data set (Tₙ(t), t < 0). For both of these data sets the data format and data structure are checked, as well as the consistency of the data set. Further an outlier extraction, a removal of duplicates and a missing value imputation are performed on both data sets. In this specific examples even a scaling of the values in the data set is performed by normalization and standardization.

Another step is the model setup step (130) for setting up at least one model Aₙ* for the slice n of the rotary kiln (1). This step comprises further sub steps. In this specific example a scoring function setup step (140) for setting up a scoring function Eₙ(t) for the slice n of the rotary kiln (1) is performed. In this specific example the scoring function is the RMSE scoring function, thus for all t *<* 0: *t*₁, ... , *t_{K},* ${E}_{n} \left(t\right) = \sqrt{{\sum }_{k = 1}^{K} \frac{{\left({A}_{n}\left({t}_{k}\right)-{T}_{n}\left({t}_{k}\right)\right)}^{2}}{K}}$. The RMSE scoring function is a function of the (to be selected) algorithm (*Aₙ*(*t*)) and the provided training outside temperature data set (Tₙ(t), t < 0). The scoring function is a measure on how good the algorithm is trained, as it is a measure of the deviations between the output of the algorithm (*Aₙ*(*t*)) and the training outside temperature data set (Tₙ(t), t < 0).

In an algorithm selection step (150) the at least one algorithm Aₙ for slice n of the rotary kiln (1) is selected from a machine learning algorithm, in this specific example the algorithm is the neural network (NN) algorithm, this algorithm Aₙ comprises model parameters ( ${P}_{k}^{n}$) and hyperparameters ( ${HP}_{j}^{n}$). In this specific example a first set of hyperparameters ( ${HP}_{1}^{n}$) is chosen (in this case this is the optimizer chosen as "rmsprop", the epochs chosen to be 100, and the batch size chosen to be 20). These specific choices of the hyperparameters ( ${HP}_{j}^{n}$) were found from a technique for the optimization of hyperparameters ( ${HP}_{1}^{n}$), in this case the method of grid search (neural network grid search) was used.

An algorithm feature selection step (160) is performed before the algorithm training step (170), where the algorithm feature selection step (160) comprises the selection of M features from the training feature data set ( ${I}_{m}^{n} \left(t\right)$, m = 1,...,M*, t < 0) comprising values for M* features for the slice n of the rotary kiln (1) and providing a selected training feature data set ( ${I}_{m}^{n} \left(t\right)$, m = 1,...,M, t < 0, M ≤ M*) comprising values for M features for the at least one slice n of the rotary kiln (1). In this example by using a correlation-based feature selection (CBFS), the above-mentioned values for M* = 150 features of the rotary kiln (1) could be reduced to M = 20 features.

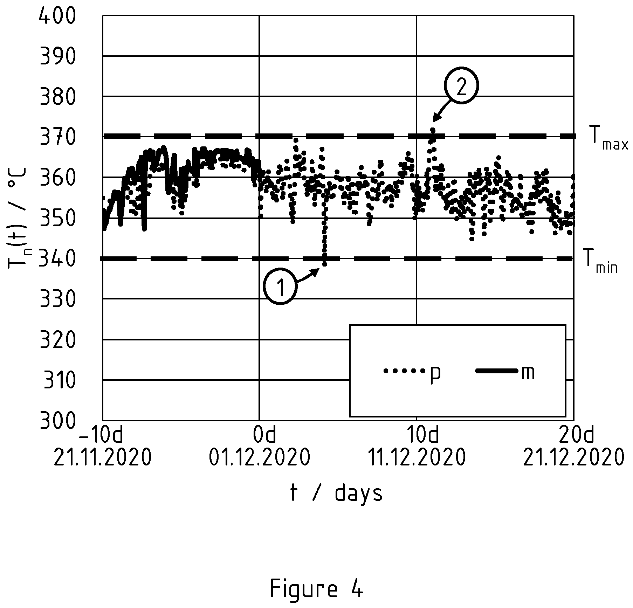

In an algorithm training step (170) the algorithm Aₙ for the slice n of the rotary kiln (1) is trained by using the selected training feature data set ( ${I}_{m}^{n} \left(t\right)$, m = 1,...,M, t < 0, M ≤ M*) comprising values for M = 20 features of the rotary kiln (1) and the training outside temperature data set (Tₙ(t), t < 0) resulting in an algorithm Aₙ* for the slice n of the rotary kiln (1) in a trained state. Training is achieved by supervised learning. Mathematically this is to be understood as a variation of the model parameters ( ${P}_{k}^{n}$) such that the scoring function Eₙ(t) (summed over all times) becomes a minimum, converges or at least that it lies below a certain threshold value (in this specific example the optimization achieved a minimum RMSE of 4.05°C). In such a trained algorithm, the output of the algorithm will generally be a good fit to the training outside temperature data set (Tₙ(t), t < 0). The algorithm in a trained stated with its optimized model parameters ( ${P}_{k}^{n *}$) and its set of hyperparameters ${HP}_{j}^{n}$ is called the model / prediction model ${A}_{n}^{∗}$, which is a function of the input features and the time ( ${A}_{n}^{∗} = {A}_{n} \left({P}_{k}^{n ∗}; {HP}_{j}^{n}\right) = f \left({I}_{m}^{n}\left(t\right);t\right)$). The output of a previously trained algorithm (trained on 21.11.2020, t = -10d; d = days), without prior knowledge of the outside temperature data set of t = -10d to t = 0; d = days) is shown in Figure 4 by the dotted line marked "p" for "predicted" in the region from t = -10d (that is from the 21.11.2020) until t = 0 (that is until the 1.12.2020). This output from a previously trained model was used as a previous prediction, which can be compared with the obtained outside temperature data set (Tₙ(t), solid line marked "m" for "measured" in the region of t = -10d to t = 0; d = days). It can be seen from this comparison, that the previous trained model was indeed capable of predicting the outside temperature data set Tₙ(t) in the region of t = -10d to t = 0 (d = days) quite well.

In a further prediction feature providing step (180) for providing a prediction feature data set ( ${I}_{m}^{n} \left(t\right)$, m = 1,...,M, t ≥ 0), the same M = 20 features are provided for the future (from t = 0 to t = +20d; d = days). These features are taken based on a production plan of the rotary kiln (1).

In a temperature prediction step (190) the outside temperature data set (Tₙ(t), t ≥ 0) for the slice n of the rotary kiln (1) is predicted based on the prediction feature data set ( ${I}_{m}^{n} \left(t\right)$, m = 1,...,M, t ≥ 0) by using the prediction model Aₙ*, so ${T}_{n} \left(t\right) = {A}_{n}^{∗} = f \left({I}_{m}^{n}\left(t\right);t\right)$ ; *t* ≥ 0. Figure 4 shows the output of a (newly) trained algorithm (trained on 1.12.2020, t = 0; dotted line marked "p" for "prediction"), which additionally to the previously trained model uses the obtained outside temperature data set Tₙ(t) in the region of t = -10d to t = 0 (d = days) as the (additional) training outside temperature data set (Tₙ(t), t < 0). This updated trained algorithm is used to predict the future outside temperature data set (Tₙ(t), t = 0 to t = 20d; d = days). After a certain time, e.g., at 11.12.2020 (thus at t = 10d), there might be another update to this trained model by using the additional outside temperature data set Tₙ(t) in the region of t = 0d to t = 10d (d = days) as the (additional) training outside temperature data set (Tₙ(t), t < 0), and so on.

A certain predefined temperature range (in this specific example between Tₘᵢₙ = 340°C and Tₘₐₓ = 370°C) can be set. In case the predicted outside temperature data set (Tₙ(t), t ≥ 0) lies outside this temperature range, an alarm can be triggered, allowing the operator to react in a timely manner. In a situation where excessive outside temperatures are predicted, the operator may change operational parameters of the kiln. Alternatively the operator may plan a repair or renewal of the refractory lining inside the kiln, well before a critical situation due to high temperatures arises. Such a situation is shown in Figure 4, where at t = 5d (marked with ① in Figure 4) a first situation occurs, where the predicted outside temperature data set (Tₙ(t), t ≥ 0) drops below the lower threshold of Tₘᵢₙ = 340°C by a few °C. In this situation where a peak down in temperature is predicted, the operator may change operational conditions to prevent such a peak down in temperature, which will prevent or at least reduce wear of the refractories based on thermoshock, so that an increased refractory lifetime can be achieved.

A second situation is shown in Figure 4, where at t = 12d (marked with ② in Figure 4), where the predicted outside temperature data set (Tₙ(t), t ≥ 0) exceeds the upper threshold of Tₘₐₓ = 370°C by a few °C. The operator may react by changing the operational parameters of the kiln to prevent this second situation. In an even more severe situation, the operator might have to react in order to prevent damage of the rotary kiln shell (3). The reaction by the operator can be planned well before such a situation arises, which either allows preventing the situation at all or allows scheduling a planned repair with a reduced downtime. In contrast, if such a situation occurs without advance notice, it may potentially lead to an emergency shutdown and unscheduled maintenance with significant downtime and production loss.

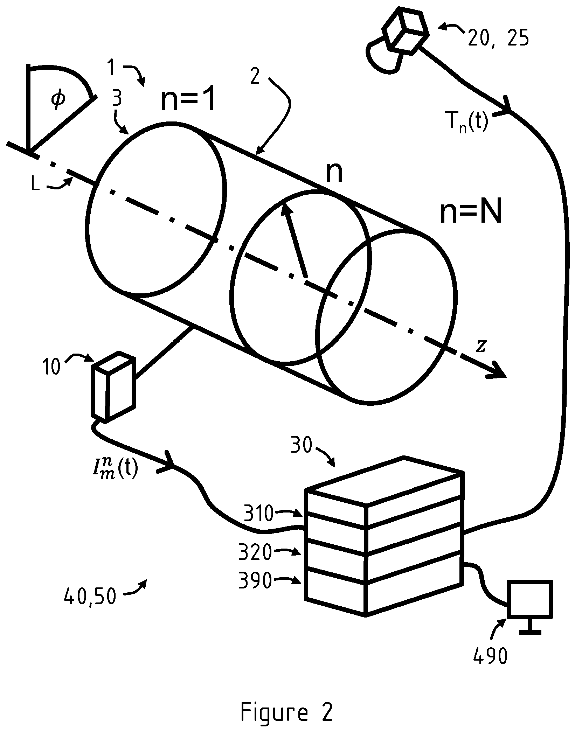

In this regard, Figure 2 also shows a specific example of prediction system (40) with a prediction unit (30) for predicting the outside temperature (Tₙ(t), t ≥ 0) of a rotary kiln shell (3) for slice n of the rotary kiln (1). The prediction unit (30) of this specific example is a computer.

The prediction unit (30) comprises a training feature interface (310) for receiving a training feature data set ( ${I}_{m}^{n} \left(t\right)$, m = 1,...,M*, t < 0) of the rotary kiln (1) from a feature providing unit (10), which provides a feature data set ( ${I}_{m}^{n} \left(t\right)$, m = 1,...,M*, t < 0) comprising values for M* = 150 features of the rotary kiln (1) received from the production information management system and / or laboratory information management system of the rotary kiln (1).

The prediction unit (30) comprises a training temperature interface (320) for receiving a training outside temperature data set (Tₙ(t), t < 0) for the slice n of the rotary kiln (1), in this example a training outside temperature data set (Tₙ(t), t < 0) for the slice n of the rotary kiln (1) is obtained by least one temperature surveillance unit (20), which is here an infrared camera (25). Here the training temperature interface (320) collects the received outside temperature data set (Tₙ(t), t < 0) over time.

The prediction unit (30) comprises a temperature prediction interface (390) for providing an outside temperature data set (Tn(t), t ≥ 0) for the slice n of the rotary kiln (1), this temperature prediction interface (390) is connected to a temperature prediction displaying device (490) for displaying information based on the outside temperature data set (Tn(t), t ≥ 0) for the slice n of the rotary kiln, which in this case is a display.

The prediction unit is programmed to perform the steps as discussed above in relation to the first aspect of the invention.

Shown in Figure 2 is a rotary kiln system (50) which comprises a rotary kiln (1) with a rotary kiln shell (3), comprising a production information management system and a laboratory information management system and the above-described prediction unit (30). Here the feature providing unit (10) receives a feature data set ( ${I}_{m}^{n} \left(t\right)$, m = 1,...,M*, t < 0) comprising values for M* = 150 features of the rotary kiln (1) from the production information management system and laboratory information management system of the rotary kiln (1) and the temperature surveillance unit (20) provides an outside temperature data set (Tₙ(t), t < 0) comprising outside temperature data of the rotary kiln shell (3) for the slice n of the rotary kiln. Also shown in Figure 2 is the longitudinal axis L of the rotary kiln (1) and the z-direction running along the direction of the longitudinal axis L, and the azimuth angle *ϕ* of the rotary kiln (1), and the slice n (n = 1,...,N) of the rotary kiln (1).

The temperature prediction displaying device (490) of this specific example shows a graph like the one of Figure 4 to an operator. Also shown will be alarm messages in case the outside temperature data set (Tₙ(t), t ≥ 0) lies outside a predefined temperature range.

In this example the method according to the first aspect of the invention is performed for a number of N = 3000 slices in parallel.

### List of reference numerals and abbreviations:

1 rotary kiln
2 (outside) surface of rotary kiln shell
3 rotary kiln shell
10 feature providing unit
20 temperature surveillance unit
25 infrared camera
30 prediction unit
40 prediction system
50 rotary kiln system
100 Method
110 training feature providing step
120 training temperature providing step
125 pre-processing step
130 model setup step
140 scoring function setup step
150 algorithm selection step
160 algorithm feature selection step
170 algorithm training step
180 prediction feature providing step
190 temperature prediction step
310 training feature interface
320 training temperature interface
390 temperature prediction interface
490 temperature prediction displaying device
L Longitudinal axis of rotary kiln 1
t time
t = tₘᵢₙ Starting time for training data set
t = 0 End time for training data set / Starting time for prediction
t ≥ 0 Prediction Period
n Index of slice, n = 1,...,N
m Index of a feature, m = 1,...,M
q Index of a segment in a slice, q = 1,...,Q
${Θ}_{n}^{q} \left(t\right)$ Outside temperature of q-th segment in n-th slice of the rotary kiln shell at time t
Tₙ(t) Temperature data set comprising temperature data for each of the N slices, n = 1,...,N, of the rotary kiln shell
Aₙ Algorithm of n-th slice
${I}_{m}^{n} \left(t\right)$ Training feature data set comprising M features (m = 1,...,M) for each of the N slices (n = 1,...,N) of the rotary kiln at time t
${P}_{k}^{n}$ set of K model parameters ( ${P}_{k}^{n}$, *k* = 1, ... , *K*) for the slice n; k = 1,...,K
${P}_{k}^{n ∗}$ Optimized set of K model parameters ( ${P}_{k}^{n}$, *k =* 1, ..., K) for the slice n; k = 1,...,K
${HP}_{j}^{n}$ Set of J hyperparameters ( ${HP}_{j}^{n}$, *j* = 1, ... , *J*) for the slice n; j = 1,...,J
Eₙ(t) Scoring function
*ϕ* Azimuth angle of the cylindrical coordinate system of the rotary kiln

## Claims

1. Method (100) for predicting an outside temperature (Tₙ(t), t ≥ 0) of a rotary kiln shell (3) for at least one slice n of a rotary kiln (1), with the steps:
(a) a training feature providing step (110) for providing a training feature data set ( ${I}_{m}^{n} \left(t\right)$, m = 1,...,M*, t < 0) comprising values for M* features of the rotary kiln (1);
(b) a training temperature providing step (120) for providing a training outside temperature of a rotary kiln shell for the at least one slice n of the rotary kiln (1) as the training outside temperature data set (Tₙ(t), t < 0);
(c) a model setup step (130) for setting up at least one prediction model Aₙ* for the at least one slice n of the rotary kiln (1), comprising:
(i) an algorithm selection step (150) for selecting at least one algorithm Aₙ for the at least one slice n of the rotary kiln (1) from a machine learning algorithm, the at least one algorithm Aₙ comprising model parameters ( ${P}_{k}^{n}$) and hyperparameters ( ${HP}_{j}^{n}$);
(ii) an algorithm training step (170) for training the at least one algorithm Aₙ for the at least one slice n of the rotary kiln (1) by using at least a part of the training feature data set ( ${I}_{m}^{n} \left(t\right)$, m = 1,...,M, t < 0, M ≤ M*) comprising values for M* features of the rotary kiln (1) and the training outside temperature data set (Tₙ(t), t < 0) leading to the at least one algorithm Aₙ for the at least one slice n of the rotary kiln (1) in a trained state;
(iii) the algorithm training step (170) is based on supervised learning;
(iv) whereas a prediction model Aₙ* is achieved, which comprises the at least one algorithm Aₙ for the at least one slice n of the rotary kiln (1) in a trained state;
(d) a prediction feature providing step (180) for providing a prediction feature data set ( ${I}_{m}^{n} \left(t\right)$, m = 1,...,M, t ≥ 0) comprising values for M features for the at least one slice n of the rotary kiln (1);
(e) a temperature prediction step (190) for predicting an outside temperature data set (Tₙ(t), t ≥ 0) for the at least one slice n of the rotary kiln (1) based on the prediction feature data set ( ${I}_{m}^{n} \left(t\right)$, m = 1,...,M, t ≥ 0) by using the prediction model Aₙ*.

2. Method according to claim 1 further comprising:
a pre-processing step (125) for pre-processing of at least one data set, whereas the at least one data set is selected from the list: a training feature data set ( ${I}_{m}^{n} \left(t\right)$, m = 1,...,M*, t < 0), training outside temperature data set (Tₙ(t), t < 0).

3. Method according to claim 2, whereas the pre-processing step (125) for pre-processing of at least one data set comprises: checking of the data format and data structure of the data set, and / or checking of the consistency of the data set and / or outlier extraction of the data set, and / or removal of duplicates in the data set and / or missing value imputation.

4. Method according to claim 2 or 3, whereas the pre-processing step (125) for pre-processing of at least one data set comprises: scaling of the values in the data set.

5. Method according to any of the preceding claims, whereas the model setup step (130) for setting up at least one model Aₙ* for the at least one slice n of the rotary kiln (1) further comprises:
an algorithm feature selection step (160) before the algorithm training step (170), whereas the algorithm feature selection step (160) comprises the selection of M features from the training feature data set ( ${I}_{m}^{n} \left(t\right)$, m = 1,...,M*, t < 0) comprising values for M* features for the at least one slice n of the rotary kiln (1) and providing a selected training feature data set ( ${I}_{m}^{n} \left(t\right)$, m = 1,...,M, t < 0, M ≤ M*) comprising values for M features for the at least one slice n of the rotary kiln (1);
preferably the algorithm feature selection step (160) comprises at least one algorithm selected from: correlation-based feature selection (CBFS), mutual information-based feature selection (MIFS), sequential forward selection (SFS), sequential backward selection (SBS).

6. Method according to any of the preceding claims, whereas in the algorithm selection step (150), the selected machine learning algorithm is selected from any of: Decision Tree (DT), Random Forest (RF), Support Vector Regression (SVR), Neural Network (NN), gradiant boosting regression, voting regression.

7. Method according to any of the preceding claims, whereas the model setup step (130) for setting up at least one prediction model Aₙ* for the at least one slice n of the rotary kiln (1) further comprises:
a scoring function setup step (140) for setting up a scoring function Eₙ(t) for the at least one slice n of the rotary kiln (1), the scoring function being selected from: RMSE, trend, weighted scoring function.

8. Method according to any of the preceding claims, whereas the model setup step (130) for setting up at least one model Aₙ* for the at least one slice n of the rotary kiln (1) comprises a scoring function setup step (140) for setting up a scoring function Eₙ for the at least one slice n of the rotary kiln (1), whereas the algorithm setup step (130) for setting up at least one algorithm Aₙ for the at least one slice n of the rotary kiln (1) is repeated for different sets (i) of hyperparameters, leading to different models Aₙ⁽ⁱ⁾ with different results of the scoring function Eₙ⁽ⁱ⁾, and subsequently the model Aₙ^{(i*)} with the best result of the scoring function Eₙ^{(i*)} is selected as the prediction model Aₙ*.

9. Method according to any of the preceding claims, whereas the prediction feature providing step (180) for providing a prediction feature data set ( ${I}_{m}^{n} \left(t\right)$, m = 1,...,M, t ≥ 0) comprises:
(a) providing the prediction feature data set ( ${I}_{m}^{n} \left(t\right)$, m = 1,...,M, t ≥ 0) based on the production plan of the rotary kiln (1); or
(b) providing the prediction feature data set ( ${I}_{m}^{n} \left(t\right)$, m = 1,...,M, t ≥ 0) based on a continuation of the values from the training feature data set ( ${I}_{m}^{n} \left(t\right)$, m = 1,...,M, t < 0, M ≤ M*); or
(c) providing the prediction feature data set ( ${I}_{m}^{n} \left(t\right)$, m = 1,...,M, t ≥ 0) based on a subset of the values from the training feature data set ( ${I}_{m}^{n} \left(t\right)$, m = 1,...,M, t < 0, M ≤ M*).

10. Method according to any of the preceding claims, the training outside temperature data set (Tₙ(t), t < 0) provided in the training temperature providing step (120) comprises temperature data of an outside surface (2) of a rotary kiln shell (3) for the at least one slice n of the rotary kiln (1) obtained by at least one temperature surveillance unit (20), preferably the temperature surveillance unit (20) comprises at least one of: an infrared camera (25), a discrete temperature measuring probe such as a thermocouple, or an optical temperature measuring device, such as a fiber-optic temperature sensor.

11. Method according to any of the preceding claims, the training outside temperature data set (Tₙ(t), t < 0) provided in the training temperature providing step (120) comprises temperature data averaged within the at least one slice n of the rotary kiln (1).

12. Prediction unit (30) for predicting the outside temperature (Tₙ(t), t ≥ 0) of a rotary kiln shell (3) for at least one slice n of the rotary kiln (1), comprising:
(a) a training feature interface (310) for receiving a training feature data set ( ${I}_{m}^{n} \left(t\right)$, m = 1,...,M*, t < 0) of the rotary kiln (1);
(b) a training temperature interface (320) for receiving the training outside temperature data set (Tₙ(t), t < 0) comprising outside temperature data of a rotary kiln shell (3) for the at least one slice n of the rotary kiln (1);
(c) a temperature prediction interface (390) for providing an outside temperature data set (Tₙ(t), t ≥ 0) for the at least one slice n of the rotary kiln (1);
the prediction unit (30) being programmed to:
(d) provide (110) the training feature data set ( ${I}_{m}^{n} \left(t\right)$, m = 1,...,M*, t < 0) comprising values for M* features of the rotary kiln (1) from the training feature interface (310);
(e) provide (120) the training outside temperature data set (Tₙ(t), t < 0) from the training temperature interface (320);
(f) set up (130) at least one model Aₙ* for the at least one slice n of the rotary kiln (1), by:
(i) selecting (150) at least one algorithm Aₙ for the at least one slice n of the rotary kiln (1) from a machine learning algorithm, the at least one algorithm Aₙ comprising model parameters ( ${P}_{k}^{n}$) and hyperparameters ( ${HP}_{j}^{n}$);
(ii) training (170) the at least one algorithm Aₙ for the at least one slice n of the rotary kiln (1) by using at least a part of the training feature data set ( ${I}_{m}^{n} \left(t\right)$, m = 1,...,M, t < 0, M ≤ M*) and the training outside temperature data set (Tₙ(t), t < 0) resulting in the at least one algorithm Aₙ for the at least one slice n of the rotary kiln (1) in a trained state;
(iii) whereas training (170) the at least one algorithm Aₙ is based on supervised learning;
(iv) achieving a prediction model Aₙ*, which comprises the at least one algorithm Aₙ for the at least one slice n of the rotary kiln (1) in a trained state, and a set of hyperparameters ( ${HP}_{j}^{n}$, *j = 1, ...,J);*
(g) provide (180) a prediction feature data set ( ${I}_{m}^{n} \left(t\right)$, m = 1,...,M, t ≥ 0) comprising values for the M features for the at least one slice n of the rotary kiln (1);
(h) predict (190) an outside temperature (Tₙ(t), t ≥ 0) for the at least one slice n of the rotary kiln (1) based on the prediction feature data set ( ${I}_{m}^{n} \left(t\right)$, m = 1,...,M, t ≥ 0) by using the prediction model Aₙ*.

13. Prediction unit (30) according to claim 12 further programmed to perform the steps of any of the claims 2 to 11.

14. Prediction system (40) for predicting the outside temperature (Tₙ(t), t ≥ 0) of a rotary kiln shell (3) for at least one slice n of the rotary kiln (1) comprising:
(a) a prediction unit (30) according to claims 12 or 13;
(b) a feature providing unit (10) for providing a training feature data set ( ${I}_{m}^{n} \left(t\right)$, m = 1,...,M*, t < 0) for the at least one slice n of the rotary kiln (1) to the training feature interface (310) of the prediction unit (30);
(c) a temperature surveillance unit (20) for providing a training outside temperature data set (Tₙ(t), t < 0) comprising temperature data of the outside surface (2) of a rotary kiln shell (3) for the at least one slice n of the rotary kiln (1) to the training temperature interface (320) of the prediction unit (30), preferably the temperature surveillance unit (20) comprises at least one of: an infrared camera (25), a discrete temperature measuring probe such as a thermocouple, or an optical temperature measuring device, such as a fiber-optic temperature sensor;
(d) a temperature prediction displaying device (490) for displaying information based on the outside temperature data set (Tₙ(t), t ≥ 0) for the at least one slice n of the rotary kiln (1) provided by the temperature prediction interface (390) of the prediction unit (30).

15. Rotary kiln system (50) comprising:
(a) a rotary kiln (1) with a rotary kiln shell (3), comprising a production information management system and / or laboratory information management system;
(b) a prediction system (40) according to claims 14;
whereas the feature providing unit (10) receives a feature data set ( ${I}_{m}^{n} \left(t\right)$, m = 1,...,M*, t < 0) comprising values for M* features or the rotary kiln (1) from the production information management system and / or laboratory information management system of the rotary kiln (1) and whereas the temperature surveillance unit (20) provides an outside temperature data set (Tₙ(t), t < 0) comprising outside temperature data of the rotary kiln shell (3) for the at least one slice n of the rotary kiln (1).

## Patentansprüche

1. Verfahren (100) zur Vorhersage einer Außentemperatur (Tₙ(t), t ≥ 0) eines Drehrohrofenmantels (3) für mindestens einen Abschnitt n eines Drehrohrofens (1), mit den folgenden Schritten:
(a) einen Trainingsmerkmalsbereitstellungsschritt (110), um einen Trainingsmerkmalsdatensatz ( ${I}_{m}^{n} \left(t\right)$, m = 1,...,M*, t < 0) bereitzustellen, der Werte für M* Merkmale des Drehrohrofens (1) enthält;
(b) einen Trainingstemperaturbereitstellungsschritt (120), bei dem eine Trainingsaußentemperatur des Drehrohrofenmantels für den mindestens einen Abschnitt n des Drehrohrofens (1) als Trainingsdatensatz der Außentemperatur (Tₙ(t), t < 0) bereitgestellt wird;
(c) einen Modellaufbauschritt (130), zum Einrichten mindestens eines Vorhersagemodells Aₙ* für mindestens einen Abschnitt n des Drehrohrofens (1), umfassend:
(i) einen Algorithmusauswahlschritt (150) zum Auswählen mindestens eines Algorithmus Aₙ für den mindestens einen Abschnitt n des Drehrohrofens (1) aus einem Algorithmus des maschinellen Lernens, wobei der mindestens eine Algorithmus Aₙ Modellparameter ( ${P}_{k}^{n}$) und Hyperparameter ( ${HP}_{j}^{n}$) umfasst;
(ii) einen Algorithmustrainingsschritt (170) zum Trainieren des mindestens einen Algorithmus Aₙ für den mindestens einen Abschnitt n des Drehrohrofens (1) unter Verwendung mindestens eines Teils des Trainingsmerkmalsdatensatzes ( ${I}_{m}^{n} \left(t\right)$, m = 1,...,M, t < 0, M ≤ M*), der Werte für M* Merkmale des Drehrohrofens (1) und den Trainingsdatensatz der Außentemperatur (Tₙ(t), t < 0) umfasst, was dazu führt, dass sich der mindestens eine Algorithmus Aₙ für den mindestens einen Abschnitt n des Drehrohrofens (1) in einem trainierten Zustand befindet;
(iii) der Algorithmustrainingsschritt (170) basiert auf überwachtem Lernen;
(iv) wobei ein Vorhersagemodell Aₙ* erzielt wird, das den mindestens einen Algorithmus Aₙ für den mindestens einen Abschnitt n des Drehrohrofens (1) in einem trainierten Zustand umfasst;
(d) einen Vorhersagemerkmalsbereitstellungsschritt (180) zur Bereitstellung eines Vorhersagemerkmalsdatensatzes ( ${I}_{m}^{n} \left(t\right)$, m = 1,...,M, t ≥ 0), der Werte für M Merkmale für den mindestens einen Abschnitt n des Drehrohrofens (1) umfasst;
(e) einen Temperaturvorhersageschritt (190) zum Vorhersagen eines Außentemperaturdatensatzes (Tₙ(t), t ≥ 0) für den mindestens einen Abschnitt n des Drehrohrofens (1) auf der Grundlage des Vorhersagemerkmalsdatensatzes ( ${I}_{m}^{n} \left(t\right)$, m = 1,...,M, t ≥ 0) unter Verwendung des Vorhersagemodells Aₙ*.

2. Verfahren nach Anspruch 1, das ferner umfasst:
einen Vorverarbeitungsschritt (125) zur Vorverarbeitung mindestens eines Datensatzes, wobei der mindestens eine Datensatz aus der folgenden Liste ausgewählt wird: ein Trainingsmerkmalsdatensatz ( ${I}_{m}^{n} \left(t\right)$, m = 1,...,M*, t < 0), ein Trainingsdatensatz der Außentemperatur (Tₙ(t), t < 0).

3. Verfahren nach Anspruch 2, wobei der Vorverarbeitungsschritt (125) zur Vorverarbeitung mindestens eines Datensatzes Folgendes umfasst: Überprüfung des Datenformats und der Datenstruktur des Datensatzes und/oder Überprüfung der Konsistenz des Datensatzes und/oder Erkennung von Ausreißern im Datensatz und/oder Entfernung von Duplikaten im Datensatz und/oder Ergänzung fehlender Werte.

4. Verfahren nach Anspruch 2 oder 3, wobei der Vorverarbeitungsschritt (125) zur Vorverarbeitung mindestens eines Datensatzes Folgendes umfasst: Skalierung der Werte im Datensatz.

5. Verfahren nach einem der vorstehenden Ansprüche, wobei der Modellaufbauschritt (130) zum Einrichten mindestens eines Modells Aₙ* für den mindestens einen Abschnitt n des Drehrohrofens (1) ferner umfasst:
einen Algorithmusmerkmalsauswahlschritt (160) vor dem Algorithmustrainingsschritt (170), wobei der Algorithmusmerkmalsauswahlschritt (160) die Auswahl von M Merkmalen aus dem Trainingsmerkmalsdatensatz ( ${I}_{m}^{n} \left(t\right)$, m = 1,...,M*, t < 0), der Werte für M* Merkmale für die mindestens einen Abschnitt n des Drehrohrofens (1) umfasst, und die Bereitstellung eines ausgewählten Trainingsmerkmalsdatensatzes ( ${I}_{m}^{n} \left(t\right)$, m = 1,...,M, t < 0, M ≤ M*), der Werte für M Merkmale für den mindestens einen Abschnitt n des Drehrohrofens (1) umfasst;
vorzugsweise umfasst der Algorithmusmerkmalsauswahlschritt (160) mindestens einen der folgenden Algorithmen: korrelationsbasierte Merkmalsauswahl (CBFS), auf gegenseitiger Information basierende Merkmalsauswahl (MIFS), sequenzielle vorwärtsgerichtete Merkmalsauswahl (SFS) und sequenzielle rückwärtsgerichtete Merkmalsauswahl (SBS).

6. Verfahren nach einem der vorangehenden Ansprüche, wobei im Algorithmusauswahlschritt (150) der ausgewählte Algorithmus für maschinelles Lernen aus einem der folgenden ausgewählt wird: Entscheidungsbaum (DT), Random Forest (RF), Support-Vektor-Regression (SVR), neuronales Netzwerk (NN), Gradient-Boosting-Regression, Voting-Regression.

7. Verfahren nach einem der vorangehenden Ansprüche, wobei der Modellaufbauschritt (130) zum Einrichten mindestens eines Vorhersagemodells Aₙ* für den mindestens einen Abschnitt n des Drehrohrofens (1) ferner umfasst:
einen Bewertungsfunktionseinrichtungsschritt (140), um eine Bewertungsfunktion Eₙ(t) für den mindestens einen Abschnitt n des Drehrohrofens (1) einzurichten, wobei die Bewertungsfunktion aus folgenden Optionen ausgewählt wird: RMSE, Trend, gewichtete Bewertungsfunktion.

8. Verfahren nach einem der vorangehenden Ansprüche, wobei der Modellaufbauschritt (130) zum Aufbau mindestens eines Modells Aₙ* für den mindestens einen Abschnitt n des Drehrohrofens (1) einen Bewertungsfunktionsaufbauschritt (140) zum Aufbau einer Bewertungsfunktion Eₙ für den mindestens einen Abschnitt n des Drehrohrofens (1) umfasst, wobei der Modellaufbauschritt (130) zum Einrichten mindestens eines Algorithmus Aₙ für den mindestens einen Abschnitt n des Drehrohrofens (1) für verschiedene Sätze (i) von Hyperparametern wiederholt wird, was zu verschiedenen Modellen Aₙ⁽ⁱ⁾ mit unterschiedlichen Ergebnissen der Bewertungsfunktion Eₙ⁽ⁱ⁾ führt, und anschließend das Modell Aₙ^{(i*)} mit dem besten Ergebnis der Bewertungsfunktion Eₙ^{(i*)} als Vorhersagemodell Aₙ* ausgewählt wird.

9. Verfahren nach einem der vorangehenden Ansprüche, wobei der Vorhersagemerkmalsbereitstellungsschritt (180) zur Bereitstellung des Vorhersagemerkmalsdatensatzes ( ${I}_{m}^{n} \left(t\right)$, m = 1,...,M, t ≥ 0), folgendes umfasst:
(a) Bereitstellung des Vorhersagemerkmalsdatensatzes ( ${I}_{m}^{n} \left(t\right)$, m = 1,...,M, t ≥ 0) auf der Grundlage des Produktionsplans des Drehrohrofens (1); oder
(b) Bereitstellung des Vorhersagemerkmalsdatensatzes ( ${I}_{m}^{n} \left(t\right)$, m = 1,...,M, t ≥ 0) auf der Grundlage einer Fortsetzung der Werte aus dem Trainingsmerkmalsdatensatz ( ${I}_{m}^{n} \left(t\right)$, m = 1,...,M, t < 0, M ≤ M*); oder
(c) Bereitstellung des Vorhersagemerkmalsdatensatzes ( ${I}_{m}^{n} \left(t\right)$, m = 1,...,M, t ≥ 0) auf der Grundlage einer Teilmenge der Werte aus dem Trainingsmerkmalsdatensatz ( ${I}_{m}^{n} \left(t\right)$, m = 1,...,M, t < 0, M ≤ M*).

10. Verfahren nach einem der vorangehenden Ansprüche, wobei der Trainingsdatensatz der Außentemperatur (Tₙ(t), t < 0), der im Trainingstemperaturbereitstellungsschritt (120) bereitgestellt wird, Temperaturdaten einer äußeren Oberfläche (2) eines Drehrohrofenmantels (3) für den mindestens einen Abschnitt n des Drehrohrofens (1) umfasst, die von mindestens einer Temperaturüberwachungseinheit (20) erfasst werden, wobei die Temperaturüberwachungseinheit (20) vorzugsweise mindestens eines der folgenden umfasst: eine Infrarotkamera (25), eine diskrete Temperaturmesssonde wie beispielsweise ein Thermoelement oder eine optische Temperaturmessvorrichtung wie beispielsweise einen faseroptischen Temperatursensor.

11. Verfahren nach einem der vorangehenden Ansprüche, wobei der Trainingsdatensatz der Außentemperatur (Tₙ(t), t < 0), der im Trainingstemperaturbereitstellungsschritt (120) bereitgestellt wird, Temperaturdaten umfasst, die innerhalb des mindestens eines Abschnitts n des Drehrohrofens (1) gemittelt sind.

12. Vorhersageeinheit (30) zur Vorhersage der Außentemperatur (Tₙ(t), t ≥ 0) eines Drehrohrofenmantels (3) für mindestens einen Abschnitt n des Drehrohrofens (1), umfassend:
(a) eine Trainingsmerkmalsschnittstelle (310) zum Empfangen eines Trainingsmerkmalsdatensatzes ( ${I}_{m}^{n} \left(t\right)$, m = 1,...,M*, t < 0) des Drehrohrofens (1);
(b) eine Trainingstemperaturschnittstelle (320) zum Empfangen des Trainingsdatensatzes der Außentemperatur (Tₙ(t), t < 0), der Außentemperaturdaten eines Drehrohrofens (3) für den mindestens einen Abschnitt n des Drehrohrofens (1) umfasst;
(c) eine Temperaturvorhersagesschnittstelle (390) zur Bereitstellung eines Außentemperaturdatensatzes (Tn(t), t ≥ 0) für den mindestens einen Abschnitt n des Drehrohrofens (1);
wobei die Vorhersageeinheit (30) so programmiert ist, dass sie Folgendes umfasst:
(d) Bereitstellen (110) des Trainingsmerkmalsdatensatzes ( ${I}_{m}^{n} \left(t\right)$, m = 1,...,M*, t < 0), der Werte für M* Merkmale des Drehrohrofens (1) umfasst, über die Trainingsmerkmalsschnittstelle (310);
(e) Bereitstellen (120) des Trainingsdatensatzes der Außentemperatur (Tₙ(t), t < 0) aus der Trainingstemperaturschnittstelle (320);
(f) Aufbauen (130) mindestens eines Modells Aₙ* für den mindestens einen Abschnitt n des Drehrohrofens (1) durch:
(i) Auswahl (150) mindestens eines Algorithmus Aₙ für den mindestens einen Abschnitt n des Drehrohrofens (1) aus Algorithmen des maschinellen Lernens, wobei der mindestens eine Algorithmus Aₙ Modellparameter ( ${P}_{k}^{n}$) und Hyperparameter ( ${HP}_{j}^{n}$) umfasst;
(ii) Trainieren (170) des mindestens einen Algorithmus Aₙ für den mindestens einen Abschnitt n des Drehrohrofens (1) unter Verwendung mindestens eines Teils des Trainingsmerkmalsdatensatzes ( ${I}_{m}^{n} \left(t\right)$, m = 1,...,M, t < 0, M ≤ M*) und des Trainingsdatensatzes der Außentemperatur (Tₙ(t), t < 0), was zu dem mindestens einen Algorithmus Aₙ für den mindestens einen Abschnitt n des Drehrohrofens (1) in einem trainierten Zustand führt;
(iii) wobei das Training (170) des mindestens einen Algorithmus Aₙ auf überwachtem Lernen basiert;
(iv) Erstellung eines Vorhersagemodells Aₙ*, das den mindestens einen Algorithmus Aₙ für den mindestens einen Abschnitt n des Drehrohrofens (1) in einem trainierten Zustand sowie einen Satz von Hyperparametern ( ${HP}_{j}^{n}$, *j* = 1, ... , *J*) umfasst;
(g) Bereitstellen (180) eines Vorhersagemerkmalsdatensatzes ( ${I}_{m}^{n} \left(t\right)$, m = 1,...,M, t ≥ 0), der Werte für die M Merkmale für den mindestens einen Abschnitt n des Drehrohrofens (1) umfasst;
(h) Vorhersage (190) einer Außentemperatur (Tₙ(t), t ≥ 0) für den mindestens einen Abschnitt n des Drehrohrofens (1) auf der Grundlage des Vorhersagemerkmalsdatensatzes ( ${I}_{m}^{n} \left(t\right)$, m = 1,...,M, t ≥ 0) unter Verwendung des Vorhersagemodells Aₙ*.

13. Vorhersageeinheit (30) nach Anspruch 12, die ferner so programmiert ist, dass sie die Schritte eines der Ansprüche 2 bis 11 ausführt.

14. Vorhersageeinheit (40) zur Vorhersage der Außentemperatur (Tₙ(t), t ≥ 0) eines Drehrohrofenmantels (3) für mindestens einen Abschnitt n des Drehrohrofens (1), umfassend:
(a) eine Vorhersageeinheit (30) gemäß Anspruch 12 oder 13;
(b) eine Merkmalsbereitstellungseinheit (10) zum Bereitstellen eines Trainingsmerkmalsdatensatzes ( ${I}_{m}^{n} \left(t\right)$, m = 1,...,M*, t < 0) für den mindestens einen Abschnitt n des Drehrohrofens (1) an die Trainingsmerkmalsschnittstelle (310) der Vorhersageeinheit (30);
(c) eine Temperaturüberwachungseinheit (20) zum Bereitstellen eines Trainingsdatensatzes für Außentemperaturen (Tₙ(t), t < 0), der Temperaturdaten der Außenfläche (2) eines Drehrohrofenmantels (3) für den mindestens einen Abschnitt n des Drehrohrofens (1) umfasst, an die Trainingstemperaturschnittstelle (320) der Vorhersageeinheit (30), wobei die Temperaturüberwachungseinheit (20) vorzugsweise mindestens eines der folgenden Elemente umfasst: eine Infrarotkamera (25), eine diskrete Temperaturmesssonde wie beispielsweise ein Thermoelement oder eine optische Temperaturmessvorrichtung wie beispielsweise einen faseroptischen Temperatursensor;
(d) eine Temperaturvorhersageanzeigevorrichtung (490) zur Anzeige von Informationen auf der Grundlage des von der Temperaturvorhersageschnittstelle (390) der Vorhersageeinheit (30) bereitgestellten Außentemperaturdatensatzes (Tₙ(t), t ≥ 0) für den mindestens einen Abschnitt n des Drehrohrofens (1).

15. Drehrohrofensystem (50), umfassend:
(a) ein Drehrohrofen (1) mit einem Drehrohrofenmantel (3), der ein Produktionsinformationsmanagementsystem und/oder ein Laborinformationsmanagementsystem umfasst;
(b) ein Vorhersagesystem (40) gemäß den Ansprüchen 14;
wobei die Merkmalsbereitstellungseinheit (10) einen Merkmalsdatensatz ( ${I}_{m}^{n} \left(t\right)$, m = 1,...,M*, t < 0) mit Werten für M* Merkmale des Drehrohrofens (1) vom Produktionsinformationsmanagementsystem und/oder Laborinformationsmanagementsystem des Drehrohrofens (1) empfängt und wobei die Temperaturüberwachungseinheit (20) einen Außentemperaturdatensatz (Tₙ(t), t < 0) mit Außentemperaturdaten des Drehrohrofenmantels (3) für den mindestens einen Abschnitt n des Drehrohrofens (1) bereitstellt.

## Revendications

1. Procédé (100) permettant de prédire la température extérieure (Tₙ(t), t ≥ 0) de l'enveloppe d'un four rotatif (3) pour au moins une tranche n d'un four rotatif (1), comprenant les étapes suivantes:
(a) une étape de mise à disposition des caractéristiques d'entraînement (110) pour la mise à disposition d'un jeu de données de caractéristiques d'entraînement ( ${I}_{m}^{n} \left(t\right)$, m = 1,...,M*, t < 0), comprenant des valeurs pour M* caractéristiques du four rotatif (1) ;
(b) une étape de mise à disposition de la température d'entraînement (120) pour la mise à disposition d'une température extérieure d'entraînement d'une enveloppe de four rotatif pour l'au moins une section n du four rotatif (1), en tant que jeu de données de température extérieure d'entraînement (Tₙ(t), t < 0);
(c) une étape de configuration du modèle (130) pour configurer au moins un modèle de prédiction Aₙ* pour l'au moins une tranche n du four rotatif (1), comprenant:
(i) une étape de sélection d'algorithme (150) pour sélectionner au moins un algorithme Aₙ pour l'au moins une section n du four rotatif (1) parmi des algorithmes d'apprentissage automatique, ledit au moins un algorithme Aₙ comprenant des paramètres de modèle ( ${P}_{k}^{n}$) et des hyperparamètres ( ${HP}_{j}^{n}$) ;
(ii) une étape d'entraînement d'algorithme (170) pour entraîner ledit au moins un algorithme Aₙ pour l'au moins une tranche n du four rotatif (1) en utilisant au moins une partie du jeu de données de caractéristiques d'entraînement ( ${I}_{m}^{n} \left(t\right)$, m = 1,...,M, t < 0, M ≤ M*) comprenant des valeurs pour M* caractéristiques du four rotatif (1) et le jeu de données de température extérieure d'entraînement (Tₙ(t), t < 0), conduisant audit au moins un algorithme Aₙ pour l'au moins une tranche n du four rotatif (1) dans un état entraîné ;
(iii) l'étape d'entraînement de l'algorithme (170) est basée sur un apprentissage supervise;
(iv) un modèle de prédiction Aₙ* est obtenu, lequel comprend ledit au moins un algorithme Aₙ pour l'au moins une tranche n du four rotatif (1) dans un état entraîné;
(d) une étape de mise à disposition des caractéristiques de prédiction (180) pour la mise à disposition d'un jeu de données de caractéristiques de prédiction ( ${I}_{m}^{n} \left(t\right)$, m = 1,...,M, t ≥ 0) comprenant des valeurs pour M caractéristiques pour l'au moins une tranche n du four rotatif (1);
(e) une étape de prévision de température (190) pour prévoir un jeu de données de température extérieure (Tₙ(t), t ≥ 0) pour l'au moins une tranche n du four rotatif (1) sur la base du jeu de données de caractéristiques de prédiction ( ${I}_{m}^{n} \left(t\right)$, m = 1,...,M, t ≥ 0) en utilisant le modèle de prédiction Aₙ* ;

2. Procédé selon la revendication 1, comprenant en outre :
une étape de prétraitement (125) pour le prétraitement d'au moins un jeu de données, ledit au moins un jeu de données étant sélectionné dans la liste suivante : un jeu de données de caractéristiques d'entraînement ( ${I}_{m}^{n} \left(t\right)$, m = 1,...,M*, t < 0), un jeu de données de température extérieure d'entraînement (Tₙ(t), t < 0).

3. Procédé selon la revendication 2, dans lequel l'étape de prétraitement (125) pour le prétraitement d'au moins un jeu de données comprend : la vérification du format des données et de la structure des données du jeu de données, et / ou la vérification de la cohérence du jeu de données, et / ou l'extraction des valeurs aberrantes du jeu de données, et / ou la suppression des doublons dans le jeu de données, et / ou l'imputation des valeurs manquantes.

4. Procédé selon la revendication 2 ou 3, dans lequel l'étape de prétraitement (125) pour le prétraitement d'au moins un jeu de données comprend : la mise à l'échelle des valeurs du jeu de données.

5. Procédé selon l'une quelconque des revendications précédentes, dans lequel l'étape de configuration du modèle (130) pour configurer au moins un modèle Aₙ* pour l'au moins une tranche n du four rotatif (1) comprend en outre:
une étape de sélection de caractéristiques d'algorithme (160) avant l'étape d'entraînement de l'algorithme (170), dans laquelle l'étape de sélection de caractéristiques d'algorithme (160) comprend la sélection de M caractéristiques à partir du jeu de données de caractéristiques d'entraînement ( ${I}_{m}^{n} \left(t\right)$, m = 1,...,M*, t < 0) comprenant des valeurs pour M* caractéristiques pour l'au moins une tranche n du four rotatif (1) et la mise à disposition d'un jeu de données de caractéristiques d'entraînement sélectionnées ( ${I}_{m}^{n} \left(t\right)$, m = 1,...,M, t < 0, M ≤ M*) comprenant des valeurs pour M caractéristiques pour l'au moins une tranche n du four rotatif (1);
de préférence, l'étape de sélection de caractéristiques d'algorithme (160) comprend au moins un algorithme sélectionné parmi: la sélection de caractéristiques basée sur la corrélation (CBFS), la sélection de caractéristiques basée sur l'information mutuelle (MIFS), la sélection séquentielle ascendante (SFS), la sélection séquentielle descendante (SBS).

6. Procédé selon l'une quelconque des revendications précédentes, dans lequel, lors de l'étape de sélection d'algorithme (150), l'algorithme d'apprentissage automatique sélectionné est choisi parmi: arbre de décision (DT), forêt aléatoire (RF), régression par machines à vecteurs de support (SVR), réseau de neurones (NN), régression par gradient boosting, régression par vote.

7. Procédé selon l'une quelconque des revendications précédentes, dans lequel l'étape de configuration du modèle (130) pour configurer au moins un modèle de prédiction Aₙ* pour l'au moins une tranche n du four rotatif (1) comprend en outre:
une étape de configuration d'une fonction de score (140) pour configurer une fonction de score Eₙ(t) pour l'au moins une tranche n du four rotatif (1), la fonction de score étant sélectionnée parmi : RMSE, tendance, fonction de score pondérée.

8. Procédé selon l'une quelconque des revendications précédentes, dans lequel l'étape de configuration du modèle (130) pour configurer au moins un modèle Aₙ* pour l'au moins une tranche n du four rotatif (1) comprend une étape de configuration d'une fonction de score (140) pour configurer une fonction de score Eₙ pour l'au moins une tranche n du four rotatif (1), l'étape de configuration de l'algorithme (130) pour configurer au moins un algorithme Aₙ pour l'au moins une tranche n du four rotatif (1) étant répétée pour différents ensembles (i) d'hyperparamètres, conduisant à différents modèles Aₙ⁽ⁱ⁾ avec différents résultats de la fonction de score Eₙ⁽ⁱ⁾, et ensuite le modèle Aₙ^{(i*)} avec le meilleur résultat de la fonction de score Eₙ^{(i*)} étant sélectionné comme modèle de prédiction Aₙ*.

9. Procédé selon l'une quelconque des revendications précédentes, dans lequel l'étape de mise à disposition des caractéristiques de prédiction (180) pour la mise à disposition d'un jeu de données de caractéristiques de prédiction ( ${I}_{m}^{n} \left(t\right)$, m = 1,...,M, t ≥ 0) comprend:
(a) la mise à disposition du jeu de données de caractéristiques de prédiction ( ${I}_{m}^{n} \left(t\right)$, m = 1,...,M, t ≥ 0) sur la base du plan de production du four rotatif (1); ou
(b) la mise à disposition du jeu de données de caractéristiques de prédiction ( ${I}_{m}^{n} \left(t\right)$, m = 1,...,M, t ≥ 0) sur la base d'une continuation des valeurs du jeu de données de caractéristiques d'entraînement ( ${I}_{m}^{n} \left(t\right)$, m = 1,...,M, t < 0, M ≤ M*); ou
(c) la mise à disposition du jeu de données de caractéristiques de prédiction ( ${I}_{m}^{n} \left(t\right)$, m = 1,...,M, t ≥ 0) sur la base d'un sous-ensemble des valeurs du jeu de données de caractéristiques d'entraînement ( ${I}_{m}^{n} \left(t\right)$, m = 1,...,M, t < 0, M ≤ M*).

10. Procédé selon l'une quelconque des revendications précédentes, dans lequel le jeu de données de température extérieure d'entraînement (Tₙ(t), t < 0) mis à disposition lors de l'étape de mise à disposition de la température d'entraînement (120) comprend des données de température d'une surface extérieure (2) d'une enveloppe de four rotatif (3) pour l'au moins une tranche n du four rotatif (1), obtenues au moyen d'au moins une unité de surveillance de la température (20), ladite unité de surveillance de la température (20) comprenant de préférence au moins l'un des éléments suivants : une caméra infrarouge (25), une sonde de mesure de température discrète telle qu'un thermocouple, ou un dispositif de mesure de température optique, tel qu'un capteur de température à fibre optique.

11. Procédé selon l'une quelconque des revendications précédentes, dans lequel le jeu de données de température extérieure d'entraînement (Tₙ(t), t < 0) mis à disposition lors de l'étape de mise à disposition de la température d'entraînement (120) comprend des données de température moyennées au sein de l'au moins une tranche n du four rotatif (1).

12. Unité de prédiction (30) destinée à prévoir la température extérieure (Tₙ(t), t ≥ 0) d'une enveloppe de four rotatif (3) pour au moins une tranche n du four rotatif (1), comprenant:
(a) une interface de caractéristiques d'entraînement (310) pour recevoir un jeu de données de caractéristiques d'entraînement ( ${I}_{m}^{n} \left(t\right)$, m = 1,...,M*, t < 0) du four rotatif (1);
(b) une interface de température d'entraînement (320) pour recevoir le jeu de données de température extérieure d'entraînement (Tₙ(t), t < 0) comprenant des données de température extérieure d'une enveloppe de four rotatif (3) pour l'au moins une tranche n du four rotatif (1);
(c) une interface de prédiction de température (390) pour fournir un jeu de données de température extérieure (Tₙ(t), t ≥ 0) pour l'au moins une tranche n du four rotatif (1);
l'unité de prédiction (30) étant programmée pour:
(d) fournir (110) le jeu de données de caractéristiques d'entraînement ( ${I}_{m}^{n} \left(t\right)$, m = 1,...,M*, t < 0) comprenant des valeurs pour M* caractéristiques du four rotatif (1) via l'interface de caractéristiques d'entraînement (310);
(e) fournir (120) le jeu de données de température extérieure d'entraînement (Tₙ(t), t < 0) via l'interface de température d'entraînement (320);
(f) configurer (130) au moins un modèle Aₙ* pour l'au moins une tranche n du four rotatif (1), en:
(i) sélectionner (150) au moins un algorithme Aₙ pour la ou les tranches n du four rotatif (1) parmi des algorithmes d'apprentissage automatique, ledit au moins un algorithme Aₙ comprenant des paramètres de modèle ( ${P}_{k}^{n}$) et des hyperparamètres ( ${HP}_{j}^{n}$);
(ii) entraîner (170) ledit au moins un algorithme Aₙ pour l'au moins une tranche n du four rotatif (1) en utilisant au moins une partie du jeu de données de caractéristiques d'entraînement ( ${I}_{m}^{n} \left(t\right)$, m = 1,...,M, t < 0, M ≤ M*) et le jeu de données de température extérieure d'entraînement (Tₙ(t), t < 0), conduisant audit au moins un algorithme Aₙ pour l'au moins une tranche n du four rotatif (1) dans un état entraîné;
(iii) l'entraînement (170) dudit au moins un algorithme Aₙ étant basé sur un apprentissage supervisé;
(iv) l'obtention d'un modèle de prédiction Aₙ*, lequel comprend ledit au moins un algorithme Aₙ pour l'au moins une tranche n du four rotatif (1) dans un état entraîné, ainsi qu'un ensemble d'hyperparamètres ( ${HP}_{j}^{n}$, *j* = 1, ... ,*J*);
(g) fournir (180) un jeu de données de caractéristiques de prédiction ( ${I}_{m}^{n} \left(t\right)$, m = 1,...,M, t ≥ 0) comprenant des valeurs pour les M caractéristiques de l'au moins une tranche n du four rotatif (1);
(h) prévoir (190) une température extérieure (Tₙ(t), t ≥ 0) pour l'au moins une tranche n du four rotatif (1) sur la base du jeu de données de caractéristiques de prédiction ( ${I}_{m}^{n} \left(t\right)$, m = 1,...,M, t ≥ 0) en utilisant le modèle de prédiction Aₙ*.

13. Unité de prédiction (30) selon la revendication 12, en outre programmée pour exécuter les étapes de l'une quelconque des revendications 2 à 11.

14. Système de prédiction (40) destiné à prévoir la température extérieure (Tₙ(t), t ≥ 0) d'une enveloppe de four rotatif (3) pour au moins une tranche n du four rotatif (1), comprenant:
(a) une unité de prédiction (30) selon les revendications 12 ou 13;
(b) une unité de mise à disposition de caractéristiques (10) pour mettre à disposition un jeu de données de caractéristiques d'entraînement ( ${I}_{m}^{n} \left(t\right)$, m = 1,...,M*, t < 0) pour l'au moins une tranche n du four rotatif (1) à l'interface de caractéristiques d'entraînement (310) de l'unité de prédiction (30);
(c) une unité de surveillance de la température (20) pour fournir un jeu de données de température extérieure d'entraînement (Tₙ(t), t < 0) comprenant des données de température de la surface extérieure (2) d'une enveloppe de four rotatif (3) pour l'au moins une tranche n du four rotatif (1) à l'interface de température d'entraînement (320) de l'unité de prédiction (30), ladite unité de surveillance de la température (20) comprenant de préférence au moins l'un des éléments suivants : une caméra infrarouge (25), une sonde de mesure de température discrète telle qu'un thermocouple, ou un dispositif de mesure de température optique, tel qu'un capteur de température à fibre optique;
(d) un dispositif d'affichage de prédiction de température (490) pour afficher des informations basées sur le jeu de données de température extérieure (Tₙ(t), t ≥ 0) pour l'au moins une tranche n du four rotatif (1) fourni par l'interface de prédiction de température (390) de l'unité de prédiction (30).

15. Système de four rotatif (50) comprenant :
(a) un four rotatif (1) avec une enveloppe de four rotatif (3), comprenant un système de gestion des informations de production et/ou un système de gestion des informations de laboratoire;
(b) un système de prévision (40) selon les revendications 14;
dans lequel l'unité de mise à disposition de caractéristiques (10) reçoit un jeu de données de caractéristiques ( ${I}_{m}^{n} \left(t\right)$, m = 1,...,M*, t < 0) comprenant des valeurs pour M* caractéristiques du four rotatif (1) à partir du système de gestion des informations de production et / ou du système de gestion des informations de laboratoire du four rotatif (1), et dans lequel l'unité de surveillance de la température (20) fournit un jeu de données de température extérieure (Tₙ(t), t < 0) comprenant des données de température extérieure de l'enveloppe du four rotatif (3) pour l'au moins une tranche n du four rotatif (1).
